# EUROPEAN PATENT SPECIFICATION

(11) **EP 1 342 737 B1**
(45) Date of publication and mention of the grant of the patent: **13.06.2007**
(21) Application number: 02005212.2
(22) Date of filing: 07.03.2002
(51) Int. Cl.: C08F 222/10, C07C 69/716

(54) **Initiator-free crosslinkable oligomers and polymers**
Initiatorfreie vernetzbare Oligomere und Polymere
Oligimères et polymères réticulables sans initiateur

(43) Date of publication of application: 10.09.2003
(73) Proprietor: DAINIPPON INK AND CHEMICALS, INC., Itabashi-ku Tokyo (JP)
(72) Inventor: Gaudl, Kai-Uwe, Dr., c/o DIC Berlin, R&D Lab., 13403 Berlin (DE); Lachowicz, Artur,Dr., c/o DIC Berlin, R&D Lab., 13403 Berlin (DE); Yatsugi, Ken-Ichi, Dr., c/o DIC Berlin, R&D Lab., 13403 Berlin (DE); Grahe, Gerwald F., Dr., c/o DIC Berlin, R&D Lab., 13403 Berlin (DE)
(74) Representative: Albrecht, Thomas

(56) References cited:
- US-A- 6 025 410

## Description

The invention describes compounds containing acrylic acid ester groups that form hard products that are tack-free on the surface and are crosslinked under ultraviolet light without using free-radical photoinitiators.

Monomers, oligomers and polymers containing acrylic acid ester groups, which are also termed acrylates, may be hardened in the presence of UV (ultraviolet) light. For this, a photoinitiator is as a rule necessary, which forms free-radicals under irradiation and initiates a free-radical polymerisation of the acrylate groups, which then leads to a hardening of the product. Monomers, oligomers and polymers containing acrylate groups as well as photoinitiators are essential constituents of radiation-hardening systems that are used as coatings, printing inks, adhesives or moulding compositions. There is a comprehensive literature on these systems, such as for example: "Chemistry and Technology of UV & EB Formulations for Coating Inks & Paints", P.K.T. Oldring (Ed.), SITA Technologies, London, UK, 1991.
The hardening of systems containing photoinitiators is however not entirely problem-free. For example, unreacted photoinitiators as well as their cleavage products remain in the coating and may lead to various problems. For example, residues of photoinitiators and cleavage products can migrate through polymeric coatings [RadTech North America 2000, Technical Proceedings, p. 1010; RadTech Europe 1999, Technical Proceedings, p. 515] and affect adjacent products. In for example the packaging industry this may lead in the case of polymer-packaged foodstuffs to a contamination of the foodstuffs themselves and has to be ruled out by special investigations [U.S. Food and Drug Administration, "Recommendations for chemistry for indirect food additive petition]. Furthermore residues of photoinitiators such as for example benzophenone or volatile cleavage products such as for example benzaldehyde [Peter G. Garrett, "Strahlenhärtung" Vincentz Verlag, Hanover, 1996, p. 33] that are formed by free-radical cleavage of α-cleavable compounds may in addition lead to the formation of an odour that adversely affects the quality of the hardened products. Further problems that arise that can be caused by photoinitiators include yellowing, which may occur when using amine-containing coinitiators [Peter G. Garrett, "Strahlenhärtung" Vincentz Verlag, Hanover, 1996, p. 107], as well as an insufficient through-hardening in the case of thick layers as a result of strong light absorption by the photoinitiators.
On account of the aforementioned disadvantages the need has arisen in the technology to provide acrylate group-containing systems that can harden in the absence of added and known photoinitiators.

Interesting intimations are given in US patent specification 6025410, where the inventors describe mixtures of acetoacetates and acrylates that polymerise under UV light in the absence of photoinitiators. However, the products obtained are described as soft and tacky (column 12, lines 39-40). Although these properties are desirable for many applications, for example for adhesives, they are undesirable for other applications, for example as coating lacquers.

We have now found that β-ketoesters and β-diketones that have been reacted with acrylic acid esters under special reaction conditions form hard, colourless products with tack-free surfaces after UV crosslinking in air.

The present invention accordingly provides acrylate group-containing oligomers and polymers that can harden in air without the addition of the known photoinitiators and that form hard, tack-free coatings and moulded articles.

The substances according to the invention are produced by reacting monomeric, oligomeric or polymeric acrylic acid esters that contain at least two acrylic acid groups, with monomeric, oligomeric or polymeric β-ketoesters and β-diketones in the presence of special catalysts and under special reaction conditions that are specified in more detail hereinafter.

Acrylic acid esters that are suitable for the production of the initiator-free hardenable products include for example: 1,2-ethanediol diacrylate, 1,3-propanediol diacrylate, 1,4-butanediol diacrylate, 1,6-hexanediol diacrylate, dipropylene glycol diacrylate, neopentyl glycol diacrylate, ethoxylated neopentyl glycol diacrylate, propoxylated neopentyl glycol diacrylate, tripropylene glycol diacrylate, bisphenol A diglycidyl ether diacrylate, ethoxylated bisphenol A diglycidyl ether diacrylate, polyethylene glycol diacrylate, trimethylolpropane triacrylate, ethoxylated trimethylolpropane triacrylate, propoxylated trimethylolpropane triacrylate, propoxylated glycerol triacrylate, tris(2-acryloyloxyethyl) isocyanurate, pentaerythritol triacrylate, ethoxylated pentaerythritol triacrylate, pentaerythritol tetraacrylate, ethoxylated pentaerythritol tetraacrylate, ditrimethylolpropane tetraacrylate, dipentaerythritol pentaacrylate, dipentaerythritol hexaacrylate, as well as acrylate group-containing oligomers and polymers obtained by reacting polyepoxides with acrylic acid (epoxyacrylates) or obtained by reacting polyester polyols with acrylic acid and/or monomeric alkyl acrylates (polyester acrylates). Particularly suitable are monomeric difunctional or trifunctional acrylates, such as for example tripropylene glycol diacrylate, trimethylolpropane triacrylate and bisphenol A diglycidyl ether diacrylate.

The β-diketones and β-ketoesters, hereinafter also termed β-dicarbonyl compounds, that are suitable for the production of the initiator-free hardenable products according to the invention include for example:
pentane-2,4-dione, hexane-2,4-dione, heptane-2,4-dione, 1-methoxy-2,4-pentanedione, 1-phenyl-1,3-butanedione, 1,3-diphenyl-1,3-propanedione, 4,6-dioxoheptanoic acid methyl ester, 5,7-dioxooctanoic acid methyl ester, benzoylacetic acid methyl ester, benzoylacetic acid ethyl ester, benzoylacetic acid butyl ester, propionylacetic acid ethyl ester, propionylacetic acid butyl ester, butyrylacetic acid methyl ester, acetoacetic acid methyl ester, acetoacetic acid ethyl ester, acetoacetic acid isopropyl ester, acetoacetic acid butyl ester, acetoacetic acid tert.-butyl ester, acetoacetic acid-(2-methoxyethyl) ester, acetoacetic acid-(2-ethylhexyl) ester, acetoacetic acid lauryl ester, 2-acetoacetoxyethyl acrylate, 2-acetoacetoxyethyl methacrylate, acetoacetic acid benzyl ester, 1,4-butanediol diacetoacetate, 1,6-hexanediol diacetoacetate, neopentyl glycol diacetoacetate, 2-ethyl-2-butyl-1,3-propanediol diacetoacetate, cyclohexanedimethanol diacetoacetate, ethoxylated bisphenol A diacetoacetate, trimethylolpropane triacetoacetate, glycerol triacetoacetate, pentaerythritol triacetoacetate, pentaerythritol tetraacetoacetate, ditrimethylolpropane tetraacetoacetate, dipentaerythritol hexaacetoacetate as well as acetoacetate group-containing oligomers and polymers obtained by transesterification of acetoacetic acid ethyl esters with oligomeric or polymeric polyols, and acetoacetate group-containing oligomers and polymers obtained by copolymerisation of 2-acetoacetoxyethyl methacrylate. Particularly suitable are benzoylacetic acid ethyl ester, acetoacetic acid methyl ester, acetoacetic acid ethyl ester, phenyl-1,3-butanedione and pentane-2,4-dione, 1,3-diphenyl-1,3-propanedione and polymeric diacetoacetates that have been produced by transesterification of unsaturated polyester diols with ethyl acetoacetate.

Suitable catalysts for the production of the products according to the invention include:
salts from the group comprising ammonium fluorides such as for example
   benzyltrimethylammonium fluoride, benzyltriethylammonium fluoride, benzyltributylammonium fluoride, tetramethylammonium fluoride, tetraethylammonium fluoride and tetrabutylammonium fluoride,
compounds from the group comprising ammonium hydroxides and ammonium methoxides, such as for example benzyltrimethylammonium hydroxide (Triton B), benzyltriethylammonium hydroxide, benzyltributylammonium hydroxide, tetramethylammonium hydroxide, tetraethylammonium hydroxide, tetrabutylammonium hydroxide, benzyltrimethylammonium methoxide and
   benzyltrimethylammonium ethoxide,
organic amines with a pK > 11
   such as for example piperidine, 1,4-dihydroxypyrimidine, 2-phenylbenzimidazole, 2-hydroxypyridine, diazabicyclooctane, diazabicyclononene, diazabicycloundecene and
   tetramethylguanidine,
inorganic bases
   such as for example sodium carbonate, potassium carbonate, calcium carbonate, calcium hydroxide, sodium hydroxide, potassium hydroxide, sodium hydride, lithium diisopropylamide and sodium amide,
organic metal salts based on alcohols and phenols
   such as for example sodium methylate, potassium methylate, sodium ethylate, potassium ethylate, magnesium ethanolate, sodium tert.-butylate, potassium tert.-butylate, sodium phenolate and potassium phenolate,
tertiary organic phosphines
   such as for example tripropylphosphine, triisopropylphosphine, trivinylphosphine, tributylphosphine, triisobutylphosphine, tri-tert.-butylphosphine, triallylphosphine, tris(2,4,4-trimethylpentyl)phosphine, tricyclopentylphosphine, tricyclohexylphosphine, cyclohexyldiphenylphosphine, dicyclohexylphenylphosphine, triphenylphosphine, tri-n-octylphosphine, tri-n-dodecylphosphine, tribenzylphosphine, dimethylphenylphosphine, 1,2-bis(diphenylphosphino)ethane, 1,3-bis(diphenylphosphino)propane, 1,4-bis(diphenylphosphino)butane. Particularly suitable catalysts for the production of the products according to the invention are tetrabutylammonium fluoride, benzyltrimethylammonium fluoride, benzyltrimethylammonium hydroxide, tetrabutylammonium hydroxide, potassium hydroxide, tetramethylguanidine, diazabicycloundecene, sodium tert.-butylate and tri-n-octylphosphine. The aforementioned catalysts may also be used in the form of a mixture of several catalysts.

The production of the initiator-free hardenable acrylate group-containing oligomers and polymers according to the invention is carried out by reacting the acrylic acid esters with the β-ketoesters and β-diketones at elevated temperature in the presence of the aforedescribed catalysts, which catalyse particularly strongly the reaction between the reactants. The amount of catalyst added is 0.3-5.0 wt.% referred to the total reaction mixture, and preferably 0.7-2.5 wt.%. The reaction temperature is 60°-140°C, preferably 80°-110°C. During the reaction of the acrylic acid esters with the β-ketoesters and β-diketones the reaction mixture is gassed with air. In addition, in the case of sensitive acrylates a polymerisation inhibitor may also be added in an amount of 0.01 to 0.5 wt.% in order to prevent an undesired polymerisation of the acrylate groups during the production. Suitable polymerisation inhibitors are for example 4-methoxyphenol and hydroquinone. The reaction time is governed by the special catalyst effect and reaction temperature and is defined by the point in time after which the viscosity of the forming, acrylate group-containing oligomers and polymers no longer rises and remains constant. The ratio of acrylate groups to the sum total of the β-ketoester groups and β-diketone groups (β-dicarbonyl compounds) is 2.5:1 to 20:1 and is governed according to the functionality of the reactants. As a general rule of thumb, the higher the functionality of the β-dicarbonyl compounds that are used, the higher must be the excess of acrylate groups so that a soluble, applicable resin is formed. With ratios of acrylate groups to β-ketoester groups and β-diketone groups of less than 2.5:1 there is the danger of a gelling of the products, particularly if they have been formed from trifunctional and higher functional acrylates and β-diketoester compounds. With an excess of the acrylate groups greater than 20:1, the ability to form initiator-free hard and tack-free products under UV light is limited. In this case there may be an insufficient hardening of the products under UV light. The products obtained by the production method described above are liquid, with viscosities of 1000-100000 mPa·s at 25°C, and are colourless or slightly yellowish. The resultant molecular weights of the initiator-free hardenable acrylate group-containing products are 500-15000.

In a preferred embodiment for the production of the acrylate group-containing products according to the invention, the catalyst is first of all mixed in the β-ketoesters and β-diketones and stirred. In this connection the reaction mixture often undergoes a slight heating or change in colour since strong catalysts in particular interact directly with the ketoesters and β-diketones and activate the latter by enolisation or carbanion formation. This mixture is then added dropwise at reaction temperatures of 60°-140°C to the acrylic acid esters. The amount added dropwise is regulated so that the temperature remains in the chosen temperature range and does not rise uncontrollably due to the exothermic reaction. The mixture is then stirred for a certain time at the reaction temperature. The end of the reaction is reached when the viscosity no longer continues to rise.

This procedure has various advantages. Due to the controlled process conditions it is ensured that the reaction continues up to its end point, namely the complete substitution of the acid function of the β-dicarbonyl compound. In this way low molecular weight compounds from the group comprising β-ketoesters and β-diketones that may under certain circumstances be toxicologically harmful are completely reacted. Products that have been produced in this way furthermore exhibit practically no increase in viscosity when stored at elevated temperature, whereas products that have been produced by reacting the acrylic acid esters with the β-dicarbonyl compounds at room temperature or under uncontrolled reaction conditions exhibit sharp rises in viscosity on prolonged storage or under storage at elevated temperature.

In the present example the product from Example 1 according to the invention and the product from comparison example 1, which was produced under the reaction conditions specified in US 6025410, were stored for one week at 60°C. Whereas the viscosity of the product from Example 1 rose by 10%, the viscosity of the product from the comparison example rose by 205%.

| Product of Example | Viscosity after Production (mPa·s at 25°C) | Viscosity after Storage at 60°C (mPa·s at 25°C) | Change (%) |
|---|---|---|---|
| 1 | 30000 | 33000 | 10 |
| | | | |
| Comparison example 1 | 7040 | 21500 | 205 |

The initiator-free UV-hardenable acrylate group-containing oligomers and polymers that are obtained may be utilised as such, or are purified further for special applications. Purification may be carried out in various ways. Thus for example, the product may be passed through an acidic ion exchanger that removes a basic catalyst, or the catalyst can be neutralised by addition of acids and then precipitated and filtered off. Combined anion exchangers and cation exchangers are suitable for removing salt-type catalysts.

For the hardening, the products according to the invention were applied to suitable substrates such as for example paper, polyethylene, polypropylene, polyester, polyvinylidene chloride, aluminium, steel or wood and hardened in air under UV irradiation. Commercially available mercury high-pressure radiators or microwavelength-excited radiators without electrodes may be used for the hardening. Particularly suitable are microwavelength-excited so-called H bulbs. These radiators also emit in a range from 225 to 325 nm in which the products according to the invention also absorb. Radiators that radiate predominantly longer wavelength UV light are less suitable.

The following table shows various products from Examples 1-10 that have been hardened under UV light. The hardness of the coatings obtained was investigated after the hardening with UV radiation using various lead pencils, and their solvent resistance was investigated with methyl ethyl ketone (MEK).

| Product of Example | Layer Thickness | Radiated Energy¹ | Solvent Resistance² | Lead Pencil Hardness³ |
|---|---|---|---|---|
| 1 | ∼60 µm | 0.6 J/cm² | > 75 | 4H |
| 2 | ∼40 µm | 0.6 J/cm² | > 75 | 2H |
| 3 | ∼40 µm | 0.6 J/cm² | > 75 | H |
| 4 | ∼50 µm | 0.6 J/cm² | > 75 | 3H |
| 5 | ∼40 µm | 0.6 J/cm² | > 75 | 4H |
| 6 | ∼40 µm | 0.6 J/cm² | > 75 | 4H |
| 7 | ∼25 µm | 0.6 J/cm² | > 75 | 3H |
| 8 | ∼25 µm | 0.6 J/cm² | ∼ 35 | H |
| 9 | ∼30 µm | 0.6 J/cm² | ∼ 75 | 3H |
| 10 | ∼20 µm | 0.6 J/cm² | ∼ 75 | 3H |

| | | | | |
|---|---|---|---|---|
| ¹Radiated amount of light for crosslinking with an F 300H lamp (total UV A, B, C) measured with a radiometer from the EIT company. | | | | |
| ²Solvent resistance of the hardened film, tested by repeated rubbing of the film surface with a woodpulp cloth impregnated with methyl ethyl ketone (MEK). The number of rubbings that still did not produce any visible damage to the coating was measured. | | | | |
| ³Lead pencil hardness after the hardening, at which the film exhibits the first visible signs of damage. | | | | |

The decisive factor for obtaining the properties according to the invention (hardness and tack-free surface) after the UV crosslinking of the products is the maintenance of the reaction parameters during the production, i.e. the reaction of β-ketoesters and β-diketones and acrylic acid esters in the presence of special catalysts at elevated temperature, and the maintenance of a specific reaction time that is predetermined by the end of the rise in viscosity. Products are formed by this production procedure that under UV irradiation in air exhibit only a slight tendency to so-called oxygen inhibition [Peter G. Garrett, "Strahlenhartung" Vincentz Verlag, Hanover, 1996, pp. 67 and 73] and therefore have a good surface hardness. If the reaction of the acrylic acid esters with the β-diketones and β-ketoesters is carried out without using a catalyst, then even at a reaction temperature of 130°C still no products are formed that under UV crosslinking produce hard and solvent-resistant coatings (comparison example 2). Also, although the mixture of acrylic acid ester and β-ketoester that was produced at low temperature under catalysis with diazabicycloundecene (DBU) exhibits a certain solvent resistance after the UV crosslinking, nevertheless the coatings are much softer and their surface is greasy and/or tacky (comparison example 1).

| Product of Example | Layer Thickness | Radiated Energy¹ | Solvent Resistance² | Lead Pencil Hardness³ | Surface Hardening |
|---|---|---|---|---|---|
| 1 | ∼25 µm | 0.4 J/cm² | > 75 | 4H | Dry |
| | | | | | |
| Comparison example 1 | ∼25 µm | 0.4 J/cm² | > 75 | 2B | Poor (Surface greasy) |
| Comparison example 2 | ∼25 µm | 0.4 J/cm² | ∼ 2 | - | Product remains liquid (no crosslinking) |

| | | | | | |
|---|---|---|---|---|---|
| ¹Radiated amount of light for crosslinking with an F 300H lamp (total UV A, B, C) measured with a radiometer from the EIT company. | | | | | |
| ²Solvent resistance of the hardened film, tested by repeated rubbing of the film surface with a woodpulp cloth impregnated with methyl ethyl ketone (MEK). The number of rubbings that still did not produce any visible damage to the coating was measured. | | | | | |
| ³Lead pencil hardness after the hardening, at which the film exhibits the first visible signs of damage. | | | | | |

The acrylate group-containing oligomers and polymers produced according to the described methods are suitable for producing UV-hardenable coatings, printing inks, adhesives, sheets and moulding compositions.

### Examples

General Production Method (Examples 1-10) The acrylic acid esters are placed in a reaction vessel, gassed with air and heated to the reaction temperature. The component consisting of a mixture of β-ketoesters and β-diketones and catalyst is then added at the reaction temperature. The reaction mixture is now stirred at the reaction temperature and from time to time a sample is taken and the viscosity is measured. The end of the reaction is reached when the viscosity of the mixture does not increase any further. Heating is then discontinued and the product is cooled to room temperature.

| Example | Mixture | | Catalyst | Catalyst Amount (wt.%) | Reaction Conditions | Viscosity (mPa·s) |
|---|---|---|---|---|---|---|
| 1 | TMPTA | 0.33 mole | (Bu)₄NF | 0.9% | 80°C/2.5h | 30000 |
| | Acetylacetone | 0.12 mole | | | | |
| | Ethyl acetoacetate | 0.01 mole | | | | |
| 2 | TMPTA | 0.33 mole | (Bu)₄NF | 0.7% | 90°C/2.5h | 8500 |
| | Acetylacetone | 0.07 mole | | | | |
| | Ethyl acetoacetate | 0.03 mole | | | | |
| 3 | TMPTA | 0.33 mole | (Bu)₄NOH 40% in methanol | 2.0% | 80°C/2h | 6400 |
| | Acetylacetone | 0.09 mole | | | | |
| | Ethyl acetoacetate | 0.01 mole | | | | |
| 4 | TMPTA | 0.33 mole | TOP | 0.7% | 90°C/2h | 8000 |
| | Acetylacetone | 0.05 mole | | | | |
| | Ethyl acetoacetate | 0.05 mole | | | | |
| 5 | TMPTA | 0.33 mole | KOTBU | 0.5% | 80°C/2h | 8000 |
| | Acetylacetone | 0.05 mole | | | | |
| | Benzoyl acetoacetate | 0.03 mole | | | | |
| | Ethyl acetoacetate | 0.02 mole | | | | |
| 6 | TMPTA | 0.33 mole | KOTBU | 0.7% | 100°C/4h | 16000 |
| | Acetylacetone | 0.06 mole | | | | |
| | Benzoyl acetoacetate | 0.04 mole | | | | |
| | Benzoylacetone | 0.03 mole | | | | |
| 7 | TMPTA | 0.33 mole | DBU | 1.0% | 120°C/5h | 25000 |
| | Acetylacetone | 0.08 mole | | | | |
| | Ethyl acetoacetate | 0.02 mole | | | | |
| 8 | TPGDA | 0.35 mole | TMG | 1.0% | 90°C/2h | 18000 |
| | Acetylacetone | 0.04 mole | | | | |
| | Ethyl acetoacetate | 0.08 mole | | | | |
| 9 | ¹Polyester acrylate | 0.10 mole | DBU | 1.0% | 80°C/2h | 40000 |
| | TPGDA | 0.23 mole | | | | |
| | Acetylacetone | 0.08 mole | | | | |
| | Ethyl acetoacetate | 0.02 mole | | | | |
| 10 | ²Epoxyacrylate | 0.23 mole | (Et)₄NOH | 1.0% | 80°C/2h | 50000 |
| | TMPTA | 0.13 mole | | | | |
| | Acetylacetone | 0.07 mole | | | | |
| | Ethyl acetoacetate | 0.03 mole | | | | |
| TMPTA = trimethylolpropane triacrylate, (Bu)₄NF = tetrabutylammonium fluoride, (Bu)₄NOH = tetrabutylammonium hydroxide, TOP = tri-n-octylphosphine, DBU = diazabicycloundecene, TMG = tetramethylguanidine, KOTBU = potassium tent.-butylate, ¹produced from phthalic anhydride, trimethylolpropane, propylene glycol and acrylic acid; ²produced from bisphenol A diglycidyl ether and acrylic acid. | | | | | | |

### Comparison Example 1:

### (Production at low temperature)

59.2 g of trimethylolpropane triacrylate were mixed with 0.40 g of diazabicycloundecene and 13.0 g of acetoacetic acid ethyl ester were added dropwise within 15 minutes while stirring. The mixture was then stirred after the cessation of the slightly exothermic reaction for 1 hour at room temperature. A slightly yellowish liquid having a viscosity of 7040 mPa·s at 25°C was obtained.

### Comparison Example 2:

### (Production at high temperature without catalyst and with long reaction time)

60.0 g of trimethylolpropane triacrylate, 7.0 g of acetoacetic acid ethyl ester and 6.0 g of acetylacetone were mixed and 0.05 g of 4-methoxyphenol was added as polymerisation inhibitor. The mixture was then gassed with air for 4 hours and heated to 130°C. After cooling, a slightly viscous yellowish liquid having a viscosity of 400 mPa·s at 25°C was obtained.

## Claims

1. Acrylate group-containing oligomers and polymers that produce hard, tack-free and crosslinked products in the presence of air under UV light free from added photoinitiators, **characterised in that** they are produced by reacting monomeric, oligomeric or polymeric β-ketoesters and β-diketones with monomeric, oligomeric or polymeric acrylic acid esters, wherein
a) the acrylic acid esters that are used are at least difunctional
b) the reaction is carried out in the presence of 0.3-5.0 wt.% of catalyst
c) the reaction temperature is 60°-140°C
d) the reaction temperature is maintained until the viscosity of the acrylate group-containing oligomers and polymers that are formed is constant
e) the ratio of acrylic acid groups to β-dicarbonyl groups is 2.5:1 to 20:1.

2. Acrylate group-containing oligomers and polymers according to claim 1, **characterised in tha**t the catalysts used are salts from the group comprising ammonium fluorides.

3. Acrylate group-containing oligomers and polymers according to claim 1, **characterised in that** the catalysts used are from the group comprising ammonium hydroxides.

4. Acrylate group-containing oligomers and polymers according to claim 1, **characterised in that** the catalysts used are amines with a pK > 11.

5. Acrylate group-containing oligomers and polymers according to claim 1, **characterised in that** the catalysts are salts from the group comprising alkali metal alcoholates or phenolates.

6. Acrylate group-containing oligomers and polymers according to claim 1, **characterised in that** the catalysts are tertiary organic phosphines.

7. Process for the production of acrylate group-containing oligomers and polymers that are hardenable free from added photoinitiator in the presence of air under UV light and that form hard, tack-free and crosslinked products, **characterised in that** monomeric, oligomeric or polymeric β-ketoesters and β-diketones are reacted in the presence of 0.3-5.0 wt.% of catalyst with monomeric, oligomeric or polymeric acrylic acid esters, wherein
a) the reaction temperature is 60°-140°C
b) the reaction temperature is maintained until the viscosity of the resultant acrylate group-containing oligomers and polymers is constant
c) the ratio of acrylic acid groups to β-dicarbonyl groups is 2.5:1 to 20:1.

8. Process according to claim 7, **characterised in that** the catalysts used are salts from the group comprising ammonium fluorides.

9. Process according to claim 7, **characterised in that** the catalysts used are from the group comprising ammonium hydroxides.

10. Process according to claim 7, **characterised in that** the catalysts used are amines with a pK of > 11.

11. Process according to claim 7, **characterised in that** the catalysts used are salts from the group comprising alkali metal alcoholates or phenolates.

12. Process according to claim 7, **characterised in that** the catalysts used are tertiary organic phosphines.

13. Crosslinked products obtained by UV irradiation of the acrylate group-containing oligomers and polymers according to claim 1.

## Patentansprüche

1. Acrylatgruppe-enthaltende Oligomere und Polymere, die von zugesetzten Photoinitiatoren frei sind und die in Gegenwart von Luft und unter UV-Licht harte, klebfreie und vernetzte Produkte ergeben, **dadurch gekennzeichnet , dass** sie **dadurch** hergestellt werden, dass monomere, oligomere oder polymere β-Ketoester und β-Diketone mit monomeren, oligomeren oder polymeren Acrylsäureestern umgesetzt werden, wobei
a) die verwendeten Acrylsäureester mindestens difunktionell sind,
b) die Reaktion in Gegenwart von 0,3-5,0 Gew.-% Katalysator durchgeführt wird,
c) die Reaktionstemperatur 60°-140°C beträgt,
d) die Reaktionstemperatur solange aufrechterhalten wird, bis die Viskosität der gebildeten Acrylatgruppe-enthaltenden Oligomeren und Polymeren konstant ist,
e) das Verhältnis von Acrylsäuregruppen zu β-Dicarbonylgruppen 2.5:1 bis 20:1 beträgt.

2. Acrylatgruppe-enthaltende Oligomere und Polymere nach Anspruch 1, **dadurch gekennzeichnet , dass** die verwendeten Katalysatoren Salze aus der Gruppe, umfassend Ammoniumfluoride sind.

3. Acrylatgruppe-enthaltende Oligomere und Polymere nach Anspruch 1, **dadurch gekennzeichnet , dass** die verwendeten Katalysatoren solche aus der Gruppe, umfassend Ammoniumhydroxide sind.

4. Acrylatgruppe-enthaltende Oligomere und Polymere nach Anspruch 1, **dadurch gekennzeichnet, dass** die verwendeten Katalysatoren Amine mit einem pK > 11 sind.

5. Acrylatgruppe-enthaltende Oligomere und Polymere nach Anspruch 1, **dadurch gekennzeichnet, dass** die Katalysatoren Salze aus der Gruppe, umfassend Alkalimetall, Alkoholate oder Phenolate sind.

6. Acrylatgruppe-enthaltende Oligomere und Polymere nach Anspruch 1, **dadurch gekennzeichnet , dass** die Katalysatoren tertiäre organische Phosphine sind.

7. Verfahren zur Herstellung von Acrylatgruppe-enthaltenden Oligomeren und Polymeren, die von einem zugesetzten Photoinitiator frei sind und in Gegenwart von Luft und unter UV-Licht härtbar sind und die harte, klebfreie und vernetzte Produkte bilden, **dadurch gekennzeichnet, dass** Monomere, Oligomere oder Polymere β-Ketoester und β-Diketone in Gegenwart von 0,3-5,0 Gew.-% eines Katalysators mit monomeren, oligomeren oder polymeren Acrylsäureestern umgesetzt werden, wobei
a) die Reaktionstemperatur 60°-140°C beträgt,
b) die Reaktionstemperatur solange aufrechterhalten wird, bis die Viskosität der resultierenden Acrylatgruppe-enthaltenden Oligomeren und Polymeren konstant ist,
c) das Verhältnis von Acrylsäuregruppen zu β-Dicarbonylgruppen 2.5:1 bis 20:1 beträgt.

8. Verfahren nach Anspruch 7, **dadurch gekennzeichnet , dass** die verwendeten Katalysatoren Salze aus der Gruppe, umfassend Ammoniumfluoride sind.

9. Verfahren nach Anspruch 7, **dadurch gekennzeichnet, dass** die verwendeten Katalysatoren solche aus der Gruppe, umfassend Ammoniumhydroxide sind.

10. Verfahren nach Anspruch 7, **dadurch gekennzeichnet, dass** die verwendeten Katalysatoren Amine mit einem pK > 11 sind.

11. Verfahren nach Anspruch 7, **dadurch gekennzeichnet, dass** die verwendeten Katalysatoren Salze aus der Gruppe, umfassend Alkalimetall, Alkoholate oder Phenolate sind.

12. Verfahren nach Anspruch 7, **dadurch gekennzeichnet, dass** die verwendeten Katalysatoren tertiäre organische Phosphine sind.

13. Vernetzte Produkte, erhalten durch Bestrahlung der Acrylatgruppe-enthaltenden Oligomeren und Polymeren nach Anspruch 1 mit UV-Licht.

## Revendications

1. Oligomères et polymères contenant un groupe acrylate qui produisent des produits durs, secs hors poisse et réticulés en présence d'air sous lumière UV dépourvue de photoinitiateurs ajoutés, **caractérisés en ce qu'**ils sont produits par mise en réaction de β-cétoesters et β-dicétones monomères, oligomères ou polymères avec des esters d'acide acrylique monomères, oligomères ou polymères, dans lesquels:
a) les esters d'acide acrylique qui sont utilisés sont au moins difonctionnels
b) la réaction est réalisée en présence de 0,3 à 5,0 % en poids de catalyseur
c) la température réactionnelle est de 60° à 140 °C
d) la température réactionnelle est maintenue jusqu'à ce que la viscosité des oligomères et des polymères contenant un groupe acrylate qui sont formés soit constante
e) le rapport des groupes acides acryliques aux groupes β-dicarbonyle est de 2,5/1 à 20/1.

2. Oligomères et polymères contenant un groupe acrylate selon la revendication 1, **caractérisés en ce que** les catalyseurs utilisés sont des sels du groupe comprenant les fluorures d'ammonium.

3. Oligomères et polymères contenant un groupe acrylate selon la revendication 1, **caractérisés en ce que** les catalyseurs utilisés sont dans le groupe comprenant les hydroxydes d'ammonium.

4. Oligomères et polymères contenant un groupe acrylate selon la revendication 1, **caractérisés en ce que** les catalyseurs utilisés sont des amines ayant unpK> 11.

5. Oligomères et polymères contenant un groupe acrylate selon la revendication 1, **caractérisés en ce que** les catalyseurs sont des sels du groupe comprenant les alcoolates ou les phénolates de métal alcalin.

6. Oligomères et polymères contenant un groupe acrylate selon la revendication 1, **caractérisés en ce que** les catalyseurs sont des phosphines organiques tertiaires.

7. Procédé de préparation d'oligomères et de polymères contenant un groupe acrylate qui sont durcissables sans photoinitiateur ajouté en présence d'air sous lumière UV et qui forment des produits durs, secs hors poisse et réticulés, **caractérisés en ce que** des β-cétoesters et β-dicétones monomères, oligomères ou polymères réagissent en présence de 0,3 à 5,0 % en poids de catalyseur avec des esters d'acide acrylique monomères, oligomères ou polymères, dans lequel:
a) la température réactionnelle est de 60° à 140 °C
b) la température réactionnelle est maintenue jusqu'à ce que la viscosité des oligomères et des polymères contenant un groupe acrylate résultants soit constante
c) le rapport des groupes acides acryliques aux groupes β-dicarbonyle est de 2,5/1 à 20/1.

8. Procédé selon la revendication 7, **caractérisé en ce que** les catalyseurs utilisés sont des sels du groupe comprenant les fluorures d'ammonium.

9. Procédé selon la revendication 7, **caractérisé en ce que** les catalyseurs utilisés sont dans le groupe comprenant les hydroxydes d'ammonium.

10. Procédé selon la revendication 7, **caractérisé en ce que** les catalyseurs utilisés sont des amines ayant un pK > 11.

11. Procédé selon la revendication 7, **caractérisé en ce que** les catalyseurs utilisés sont des sels du groupe comprenant les alcoolates ou les phénolates de métal alcalin.

12. Procédé selon la revendication 7, **caractérisé en ce que** les catalyseurs utilisés sont des phosphines organiques tertiaires.

13. Produits réticulés obtenus par irradiation UV des oligomères et des polymères contenant un groupe acrylate selon la revendication 1.
